# EUROPEAN PATENT APPLICATION

(11) **EP 4 803 360 A1**
(43) Date of publication of application: **09.09.2026**
(21) Application number: 26161359.0
(22) Date of filing: 27.02.2026
(51) Int. Cl.: B60N 2/18, B60N 2/427

(54) **VEHICLE SEAT**

(30) Priority: 04.03.2025 CN 202510248432
(71) Applicant: Brose Fahrzeugteile SE & Co. Kommanditgesellschaft, Coburg, 96450 Coburg (DE)
(72) Inventor: BIRADAR, Bharath, Shanghai, 201103 (CN); LIU, Zizheng, Malu Town, Jiading District, Shanghai City, 201801 (CN)
(74) Representative: Maikowski & Ninnemann Patentanwälte Partnerschaft mbB

(57) **Abstract**

The present invention provides a vehicle seat, including a base to be fixed to a vehicle floor, a seat frame located above the base, a front link, a tilt-angle adjustment link, and a tilt-angle adjustment drive mechanism that adjusts a tilt angle of the seat frame. The vehicle seat further includes a bracket mounted on the base and extending from the front side to the rear side of the base. The front link has one end pivotally connected to the seat frame on the front side of the seat frame and the other end pivotally connected to one end of the tilt-angle adjustment link. The other end of the tilt-angle adjustment link is pivotally connected to the front portion of the bracket. The tilt-angle adjustment drive mechanism is configured to drive the tilt-angle adjustment link to rotate about a pivot point of the tilt-angle adjustment link with the bracket. According to the present invention, the bracket is provided with an energy absorbing slot, the tilt-angle adjustment link is pivotally connected in the energy absorbing slot with a predetermined holding force, and the tilt-angle adjustment link is slidable along the energy absorbing slot when subjected to a force exceeding the predetermined holding force. The vehicle seat of the present invention is capable of achieving collision energy absorption and occupant protection, and has a simple structure and relatively low weight.

## Description

### TECHNICAL FIELD

The present invention relates to the field of vehicles, and specifically to a vehicle seat, in particular a zero-gravity vehicle seat.

### BACKGROUND ART

With the increasing demand for ride comfort from vehicle occupants, more and more vehicles, especially new energy vehicles, are equipped with zero-gravity vehicle seats. With this, the requirements for safety of the zero-gravity vehicle seats at large tilt angles during vehicle travel are also increasing.

To improve safety, All Belts To Seat (ABTS) technology has been developed. With this technology, in the event of a collision, by means of a retractor fixed to the seat back, the ABTS implements a seat belt locking function in which the angle of the seat back conforms to the posture of the human body, thereby providing effective protection to occupants. Although the ABTS is suitable as an occupant protection measure for a zero-gravity vehicle seat, the energy at the time of a collision is still very large, which requires a very heavy and robust vehicle seat to withstand this energy. Moreover, when an occupant is in a zero-gravity position or a relaxed seating position, the angle between the occupant's thighs and torso is greater than that in a normal seating position, causing the occupant's spine/chest/waist/abdomen/shoulders/neck to be subjected to significant forces during a collision. To avoid this risk, during a collision, the vehicle seat should be pivoted to return the occupant to the normal seating position, which is generally achieved by a pre-collision protection function of the vehicle seat, or the vehicle seat should be pivoted to allow the thigh/torso angle of the occupant to gradually return/reduce to a normal angle, returning the occupant to the normal seating position, which is generally achieved by using a passive collision-absorbing element of the vehicle seat.

Lear Corporation has developed a vehicle seat that employs a gearbox and a spindle, the pivot point of which is collapsed with a sliding nut to absorb collision energy.

Yanfeng Corporation has also developed a vehicle seat that employs a recliner mechanism for the zero-gravity function and uses a gear drive mechanism and a dynamic signal cable to lock and unlock the recliner. When the recliner is disengaged during a collision, a friction disc is used to absorb the collision energy.

The above energy absorbing structures have a disadvantage that there is a risk of damage to the gearbox or the drive mechanism during a collision. Moreover, in the event that the energy absorbing mechanism is activated by an erroneous operation, the energy absorbing mechanism cannot be used any more. There is a need to improve existing vehicle seats.

### SUMMARY OF THE INVENTION

An object of the present invention is to provide an improved vehicle seat, which can overcome the above-mentioned disadvantages of the existing vehicle seats.

According to the present invention, there is provided a vehicle seat, particularly a zero-gravity vehicle seat, specifically a seat structure, comprising a base to be fixed to a vehicle floor, a seat frame located above the base, a front link, a tilt-angle adjustment link, a rear link, and a tilt-angle adjustment drive mechanism that adjusts a tilt angle of the seat frame. In addition, the vehicle seat further comprises a bracket mounted on the base, which is configured to be plate-like, for example, and extends from the front side to the rear side of the base. The front link has one end pivotally connected to the seat frame on the front side of the seat frame and the other end pivotally connected to one end of the tilt-angle adjustment link. The other end of the tilt-angle adjustment link is pivotally connected to the front portion of the bracket. The rear link has one end pivotally connected to the rear portion of the bracket and the other end pivotally connected to the seat frame on the rear side of the seat frame. The tilt-angle adjustment drive mechanism is configured to drive the tilt-angle adjustment link to rotate about a pivot point of the tilt-angle adjustment link with the bracket. According to an embodiment, the bracket is provided with an energy absorbing slot, the tilt-angle adjustment link is pivotally connected in the energy absorbing slot with a predetermined holding force, and the tilt-angle adjustment link is slidable along the energy absorbing slot when subjected to a force exceeding the predetermined holding force.

With this arrangement, the vehicle seat of the present invention only requires the addition of one energy absorbing slot, without any additional components, to reduce the thigh/torso angle of the occupant from the zero-gravity/relaxed position to the normal seating position while achieving an angular collapse of approximately 10 to15 degrees and energy absorption during this period. Therefore, the vehicle seat of the present invention has a simple structure and relatively low weight.

According to an embodiment, the base is configured to be a slide rail. With this arrangement, the vehicle seat can be adjusted in the front-rear direction.

According to an embodiment, a pivot point of the tilt-angle adjustment link with the energy absorbing slot is provided with a pivot shaft, and the pivot shaft is held in the energy absorbing slot, and is slidable along the energy absorbing slot when subjected to a force exceeding the predetermined holding force.

According to an embodiment, as the tilt-angle adjustment link slides along the energy absorbing slot from one end to the other end, the tilt-angle adjustment link rotates about a pivot point of the tilt-angle adjustment link with the front link by approximately 10 to 15 degrees.

According to an embodiment, the energy absorbing slot is configured to extend obliquely downward from a front side to a rear side. With this arrangement, a large rotation angle of the tilt-angle adjustment link can be achieved with a limited length.

According to an embodiment, the energy absorbing slot has a front end, a rear end, and an intermediate section, and the intermediate section transitions to each of the front end and the rear end via a necked-down portion. With this arrangement, the pivot shaft of the tilt-angle adjustment link can be tightly held in the energy absorbing slot before a collision. Also, during a frontal collision, the pivot shaft of the tilt-angle adjustment link is able to slide along the energy absorbing slot from one end against the holding force, and gradually dissipates the collision energy during the sliding. Moreover, at the time of a frontal collision, the pivot shaft of the tilt-angle adjustment link can be finally locked tightly in the energy absorbing slot again after sliding to the other end. At the same time, the vehicle seat is returned from the zero-gravity position to the normal seating position. Thus, the collision energy absorption and occupant protection are achieved.

Preferably, the front end and the rear end of the energy absorbing slot are configured to be rounded.

Preferably, a friction element is mounted on a wall of the energy absorbing slot. With this arrangement, gradual absorption of collision energy can be achieved while sliding along the energy absorbing slot.

According to an embodiment, the tilt-angle adjustment drive mechanism comprises a spindle motor arranged in a direction perpendicular to a front-rear direction of the vehicle seat, and a lead screw engaged with an output end of the spindle motor, wherein the spindle motor is provided on the tilt-angle adjustment link, and one end of the lead screw is pivotably provided on the front portion of the bracket, and wherein rotation of the output end of the spindle motor causes the spindle motor to move along the lead screw, and drive the tilt-angle adjustment link to rotate about the pivot point of the tilt-angle adjustment link with the bracket. The other end of the lead screw is provided with a stopper to define the limit of travel of the spindle motor along the lead screw, or is configured as a free end, with the limit of travel being set by an electronic control unit.

According to a specific embodiment, a pivot point of the front link with the seat frame is located in front of the energy absorbing slot. With this arrangement, in the large angle tilt position, the pivot shaft is held at the front end of the energy absorbing slot, and in the normal seating position, the pivot shaft is held at the rear end of the energy absorbing slot, and from the large angle tilt position to the normal seating position, the front link and the lead screw are turned rearward about their pivot points with the tilt-angle adjustment link and with the bracket, respectively.

According to another specific embodiment, a pivot point of the front link with the seat frame is located behind the energy absorbing slot. With this arrangement, in the large angle tilt position, the pivot shaft is held at the rear end of the energy absorbing slot, in the normal seating position, the pivot shaft is held at the front end of the energy absorbing slot, and from the large angle tilt position to the normal seating position, the front link and the lead screw are rotated forward about their pivot points with the tilt-angle adjustment link and the bracket, respectively.

According to the vehicle seat of the present invention, by means of the above energy absorbing slot, the vehicle seat is returned from the large angle tilt position to the normal seating position during the collision to return the occupant from the zero-gravity position to the normal seating position, making up for the deficiency of the ABTS function. Moreover, with the above energy absorbing mechanism, the vehicle seat is relatively light in weight and strong enough to withstand the energy of collision, thereby protecting the occupant well.

According to the vehicle seat of the present invention, the occupant's thigh/torso angle is allowed to return from the zero-gravity/relaxed position to the normal seating position by the tilt-angle adjustment link moving along the energy absorbing slot to cause it to rotate about the pivot point of the tilt-angle adjustment link with the front link, achieving a collapse of about 10 to 15 degrees (as needed).

According to the vehicle seat of the present invention, the energy absorbing slot can be designed to be activated bidirectionally, in order to be suitable for the lead screw angle/kinematic configuration of the vehicle seat in the zero-gravity position and in the normal sitting position.

According to the vehicle seat of the present invention, the energy absorbing slot may be activated at a predetermined pivoting force to enable absorption of collision energy during a collision. Moreover, during normal use of the vehicle seat, the pivot shaft of the tilt-angle adjustment link may be used as a normal pivot point.

According to the vehicle seat of the present invention, the risk of damage to the gearbox/drive mechanism in the exiting solutions is avoided, thereby enabling the desired energy absorption during a collision. Moreover, if the energy absorbing slot is activated in the event of misuse, the vehicle seat can be returned to the normal position simply by returning the pivot shaft of the tilt-angle adjustment link to its original position along the energy absorbing slot.

### BRIEF DESCRIPTION OF THE DRAWINGS

The features and advantages of the present invention will be apparent from the following detailed description of the embodiments of the present invention with reference to the drawings. In the drawings:
FIG. 1 is a side view of a vehicle seat according to one embodiment of the present invention, wherein the vehicle seat is in a large angle tilt position, i.e., a zero-gravity position;
FIG. 2 is a side view of the vehicle seat shown in FIG. 1 in a normal seating position;
FIG. 3 is an enlarged partial view of the vehicle seat shown in FIG. 1;
FIG. 4 is an enlarged partial view of the vehicle seat shown in FIG. 2;
FIG. 5 shows details of an energy absorbing slot;
FIG. 6 is a side view of a vehicle seat according to another embodiment of the present invention, wherein the vehicle seat is in a large angle tilt position, i.e., a zero-gravity position;
FIG. 7 is a side view of the vehicle seat shown in FIG. 6 in a normal seating position;
FIG. 8 is an enlarged partial view of the vehicle seat shown in FIG. 6, and
FIG. 9 is an enlarged partial view of the vehicle seat shown in FIG. 7.

In the drawings, the embodiments of the present invention are illustrated in a simplified manner for clarity. The drawings are not necessarily to scale. Like reference numerals in the drawings denote like components.

### DETAILED DESCRIPTION OF PREFERRED EMBODIMENTS

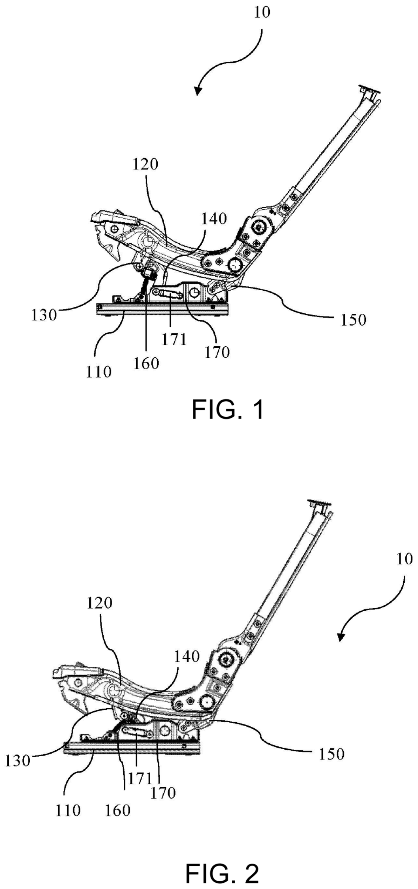

Embodiments of the present invention will be explained in more detail below with reference to FIGS. 1 to 9. For ease of description, directional terms are used in the specification, which refer to the orientation shown in the figures, and the actual orientation may be different.

In the following embodiments, reference is made to a zero-gravity vehicle seat. It is conceivable that other types of vehicle seats are also possible.

FIGS. 1 and 2 show a zero-gravity vehicle seat 10 according to an embodiment of the present invention, which is specifically a seat structure, including a base 110 configured to be a slide rail, a seat frame 120 located above the base, a front link 130, a tilt-angle adjustment link 140, a rear link 150, and a tilt-angle adjustment drive mechanism 160 that adjusts a tilt angle of the seat frame 120. In addition, the vehicle seat 10 further includes a bracket 170 mounted on the base 110, which is configured to be plate-like and extends from the front side to the rear side of the base 110.

The base 110 is to be fixed to the floor of a vehicle, and is configured to be a slide rail, for example, so that the seat frame 120 can slide along the slide rail by means of a front-rear drive mechanism (such as a drive motor, not shown in the figure) to realize the adjustment of the vehicle seat in a front-rear direction. The front link 130 has one end pivotally connected to the seat frame 120 on the front side of the seat frame 120 and the other end pivotally connected to one end of the tilt-angle adjustment link 140. The other end of the tilt-angle adjustment link 140 is pivotally connected to the front portion of the bracket 170. The rear link 150 has one end pivotally connected to the rear portion of the bracket 170 and the other end pivotally connected to the seat frame 120 on the rear side of the seat frame 120. The tilt-angle adjustment drive mechanism 160 drives the tilt-angle adjustment link 140 to rotate about a pivot point of the tilt-angle adjustment link with the bracket 170. In a case where the base 110 is configured to be a slide rail, the bracket 170 is mounted on the base 110 in such a manner that it is slidable along the slide rail, so as to move forward and backward together with the seat frame 120. Thus, the base 110, and the bracket 170, the seat frame 120, the front link 130, the tilt-angle adjustment link 140 and the rear link 150 which are mounted on the base 110 form a five-link structure.

The vehicle seat 10 has a five-link mechanism on each side, with a front portion being provided with three pivot points, namely, a pivot point at which one end of the front link 130 is pivotally connected to the seat frame 120, a pivot point at which the other end of the front link is pivotally connected to one end of the tilt-angle adjustment link 140, and a pivot point at which the other end of the tilt-angle adjustment link 140 is pivotally connected to the front portion of the bracket 170, and with a rear portion being provided with two pivot points, namely, an upper pivot point at which the rear link 150 is pivotally connected to the rear side of the seat frame and a lower pivot point arranged at the rear portion of the bracket 170, and the rear link 150 is connected to the two rear pivot points. The five pivot points have two pivot points located at an upper portion, and the edge of the seat frame 120 is connected to the two pivot points at the upper portion.

The tilt-angle adjustment drive mechanism 160 includes a spindle motor 161 arranged in a direction perpendicular to the front-rear direction of the vehicle seat 10, and a lead screw 162 engaged with an output end of the spindle motor 162, wherein the spindle motor 161 is provided on the tilt-angle adjustment link 140, one end of the lead screw 162 is pivotably provided at the front portion of the bracket 170, and wherein rotation of the output end of the spindle motor 161 causes the spindle motor to move along the lead screw 162, which in turn drives the tilt-angle adjustment link 140 to rotate about the pivot point of the tilt-angle adjustment link with the bracket 170, thereby adjusting the tilt angle of the seat frame 120. The position of the pivot point of the tilt angle adjustment link 140 is located between the pivot points of the lead screw 162 and the rear link 150 with the bracket 170.

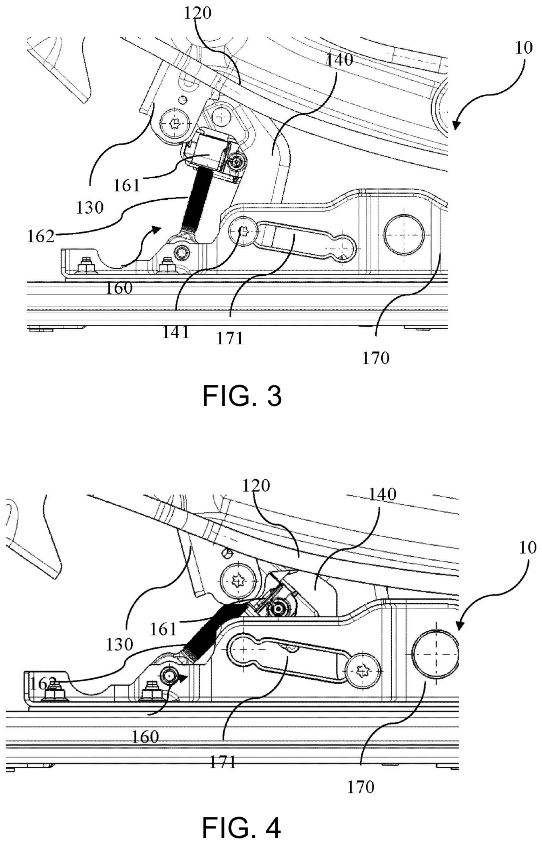

In this example, the tilt-angle adjustment link 140 is configured to be generally L-shaped, and the pivot point of the tilt-angle adjustment link with the bracket 170 is provided with a pivot shaft 141. For details, refer to FIGS. 3 and 4.

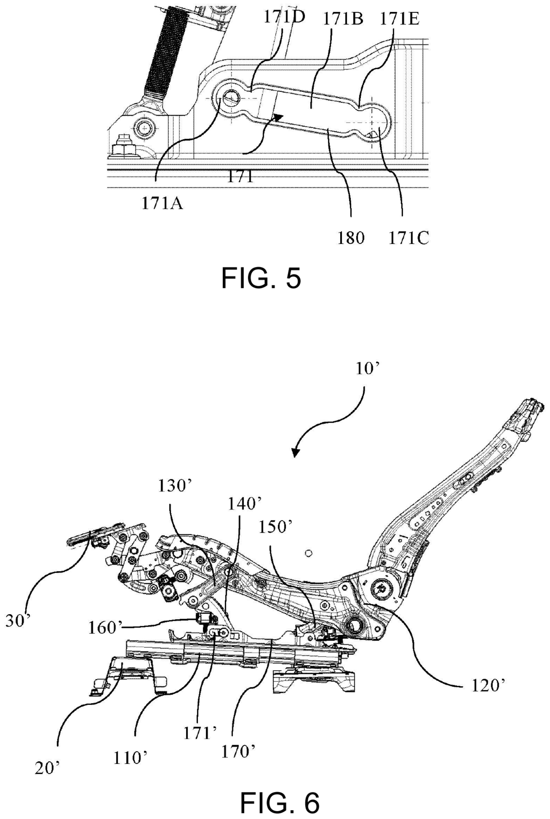

FIGS. 1 to 4 also show that the bracket 170 is provided with an energy absorbing slot 171, which is of an elongated configuration and extends obliquely downward from a front side to a rear side. As shown in FIG. 5, the energy absorbing slot 171 has a front end 171A, an intermediate section 171B, and a rear end 171C, wherein the intermediate section 171B transitions to the front and rear ends via a front necked-down portion 171D and a rear necked-down portion 171E, respectively. The front end and the rear end of the energy absorbing slot 171 are configured to be rounded. In addition, a friction element 180 is mounted on a wall of the energy absorbing slot 171.

The vehicle seat 10 in FIG. 1 is in a large angle tilt position, i.e., a zero-gravity position or a fully tilted position, and the vehicle seat 10 in FIG. 2 is in a normal seating position. FIGS. 3 and 4 show enlarged partial views of FIGS. 1 and 2, respectively. As shown in FIG. 3, the pivot shaft 141 of the tilt-angle adjustment link 140 is pivotally connected in the energy absorbing slot 171 with a predetermined holding force, so that the pivot shaft 141 of the tilt-angle adjustment link 140 is tightly held at the front end 171A of the energy absorbing slot 171 during normal use of the vehicle seat. When a collision such as a frontal collision occurs, the force of collision causes the pivot shaft 141 of the tilt-angle adjustment link 140 to overcome the holding force of the energy absorbing slot 171, so that the pivot shaft slides from the front end 171A through the front necked-down portion 171D, along the intermediate section 171B, and through the rear necked-down portion 171E to the rear end 171C. At the rear end 171C, the pivot shaft 141 is again tightly held in the energy absorbing slot 171, as shown in FIG. 4. As the pivot shaft 141 moves, the tilt-angle adjustment link 140 rotates about a pivot point of the tilt-angle adjustment link with the front link 130, which in turn drives the front link 130 to rotate, thereby returning the seat frame 120 from the large angle tilt position to the normal seating position.

In this example, as shown in FIGS. 3 and 4, the pivot point of the front link 130 with the seat frame 120 is located in front of the energy absorbing slot 171. In this case, in the large angle tilt position, the pivot shaft 141 is held at the front end 171A of the energy absorbing slot 171, in the normal seating position, the pivot shaft 141 is held at the rear end 171C of the energy absorbing slot 171, and from the large angle tilt position to the normal seating position, the front link 130 and the lead screw 162 are rotated backward about their pivot points with the tilt-angle adjustment link 140 and the bracket 170, respectively.

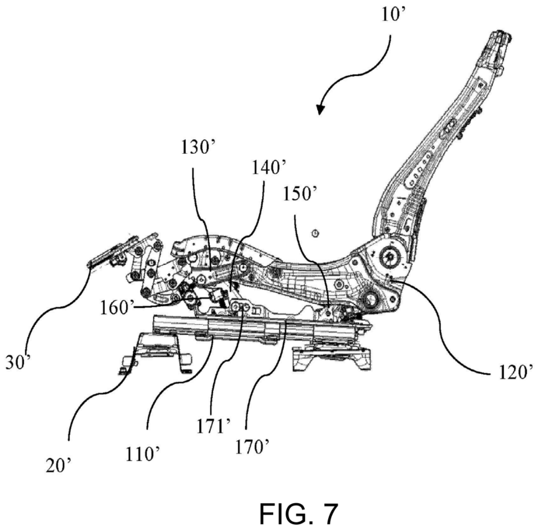

FIGS. 6 and 7 show a zero-gravity vehicle seat 10' according to another embodiment of the present invention, including a base 110' configured to be a slide rail, a seat frame 120' located above the base, a front link 130', a tilt-angle adjustment link 140', a rear link 150', and a tilt-angle adjustment drive mechanism 160' that adjusts a tilt angle of the seat frame 120'. In addition, the vehicle seat 10' further includes a bracket 170' mounted on the base 110', which is configured to be plate-like and extends from the front side to the rear side of the base 110'. The configuration of the components and their connections to one another are the same as in the embodiments shown in FIGS. 1 to 4.

FIGS. 6 and 7 also show a vehicle floor 20' and a leg rest assembly 30'.

Similarly, FIGS. 6 to 9 also show that the bracket 170' is provided with an energy absorbing slot 171', which is in an elongated configuration and extends obliquely downward from a front side to a rear side. As shown in FIG. 5, the energy absorbing slot 171' has a front end 171A', an intermediate section 171B', and a rear end 171C', wherein the intermediate section 171B' transitions to the front and rear ends via a front necked-down portion 171D' and a rear necked-down portion 171E', respectively. The front end and the rear end of the energy absorbing slot 171' are configured to be rounded. In addition, a friction element 180' is mounted on a wall of the energy absorbing slot 171'.

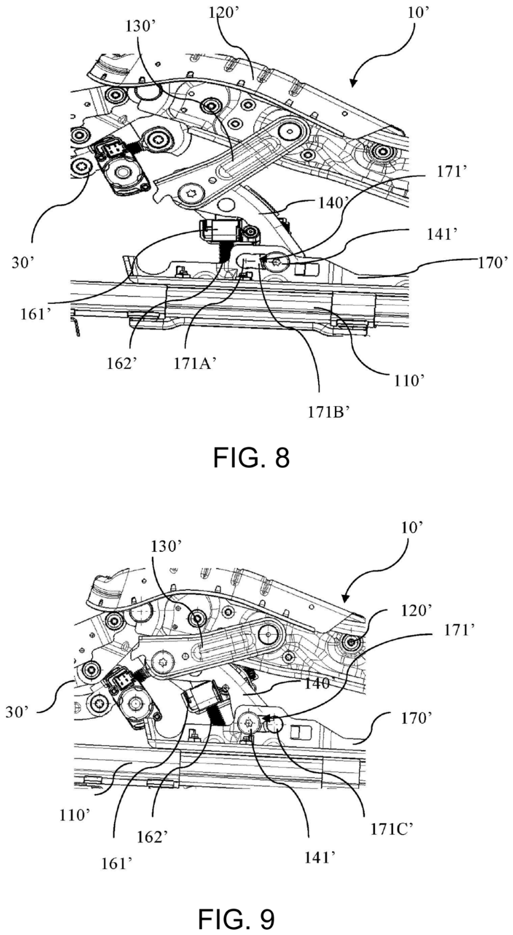

In this example, the tilt-angle adjustment link 140' is also configured to be generally L-shaped, and the pivot point of the tilt-angle adjustment link with the bracket 170' is provided with a pivot shaft 141'. For details, refer to FIGS. 8 and 9.

The vehicle seat 10' in FIG. 6 is in a large angle tilt position, i.e., a zero-gravity position or a fully tilted position, and the vehicle seat 10' in FIG. 7 is in a normal seating position. FIGS. 8 and 9 show enlarged partial views of FIGS. 6 and 7, respectively. As shown in FIG. 8, the pivot shaft 141' of the tilt-angle adjustment link 140' is pivotally connected in the energy absorbing slot 171' with a predetermined holding force, so that the pivot shaft 141' of the tilt-angle adjustment link 140' is tightly held at the rear end 171C' of the energy absorbing slot 171' during normal use of the vehicle seat. When a collision such as a frontal collision occurs, the force of collision causes the pivot shaft 141' of the tilt-angle adjustment link 140' to overcome the holding force of the energy absorbing slot 171', so that the pivot shaft slides from the rear end 171C' through the rear necked-down portion, along the intermediate section 171B', and through the front necked-down portion to the front end 171A'. At the front end 171A', the pivot shaft 141' is again tightly held in the energy absorbing slot 171', as shown in FIG. 9. With the movement of the pivot shaft 141', the tilt-angle adjustment link 140' rotates about a pivot point of the tilt-angle adjustment link with the front link 130', which in turn drives the front link 130' to rotate, thereby returning the seat frame 120' from the large angle tilt position to the normal seating position.

In this example, the pivot point of the front link 130' with the seat frame 120' is located behind the energy absorbing slot 171'. In this case, in the large angle tilt position, the pivot shaft 141' is held at the rear end 171C' of the energy absorbing slot 171'; in the normal seating position, the pivot shaft 141' is held at the front end 171A' of the energy absorbing slot 171', and from the large angle tilt position to the normal seating position, the front link 130' and the lead screw 162' are rotated forward about their pivot points with the tilt-angle adjustment link 140' and the bracket 170', respectively.

In some cases, the features disclosed in the present invention may be used independently of other features. On the other hand, the features disclosed in the present invention may be combined to provide various combinations when necessary.

As described above, the embodiments of the present invention relate to a zero-gravity vehicle seat. However, it can be understood that the present invention may be applied to other vehicle seats as well. The terms and expressions used in the present invention are intended to be illustrative rather than restrictive, and the use of such terms and expressions is not intended to exclude any equivalents of the features shown and described from the scope of the present invention. Various modifications, variations, and alternatives are possible within the scope of the claims. The claims are intended to cover all such equivalents.

## Claims

1. A vehicle seat, comprising a base to be fixed to a vehicle floor, a seat frame located above the base, a front link, a tilt-angle adjustment link, and a tilt-angle adjustment drive mechanism that adjusts a tilt angle of the seat frame, wherein the vehicle seat further comprises a bracket mounted on the base and extending from a front side to a rear side of the base, wherein the front link has one end pivotally connected to the seat frame on a front side of the seat frame and the other end pivotally connected to one end of the tilt-angle adjustment link, and the other end of the tilt-angle adjustment link is pivotally connected to a front portion of the bracket, and wherein the tilt-angle adjustment drive mechanism is configured to drive the tilt-angle adjustment link to rotate about a pivot point of the tilt-angle adjustment link with the bracket, **characterized in that** the bracket is provided with an energy absorbing slot, the tilt-angle adjustment link is pivotally connected to the energy absorbing slot with a predetermined holding force, and the tilt-angle adjustment link is slidable along the energy absorbing slot when subjected to a force exceeding the predetermined holding force.

2. The vehicle seat according to claim 1, wherein a pivot point of the tilt-angle adjustment link with the energy absorbing slot is provided with a pivot shaft, and the pivot shaft is held in the energy absorbing slot, and is slidable along the energy absorbing slot when subjected to a force exceeding the predetermined holding force.

3. The vehicle seat according to claim 1 or 2, wherein as the tilt-angle adjustment link slides along the energy absorbing slot from one end to the other end, the tilt-angle adjustment link rotates about a pivot point of the tilt-angle adjustment link with the front link by approximately 10 to 15 degrees.

4. The vehicle seat according to claim 1 or 2, wherein the energy absorbing slot is configured to extend obliquely downward from a front side to a rear side.

5. The vehicle seat according to claim 1 or 2, wherein the energy absorbing slot has a front end, a rear end, and an intermediate section, and the intermediate section transitions to each of the front end and the rear end via a necked-down portion.

6. The vehicle seat according to claim 5, wherein the front end and the rear end of the energy absorbing slot are configured to be rounded.

7. The vehicle seat according to claim 1 or 2, wherein a friction element is mounted on a wall of the energy absorbing slot.

8. The vehicle seat according to claim 1 or 2, wherein the tilt-angle adjustment drive mechanism comprises a spindle motor arranged in a direction perpendicular to a front-rear direction of the vehicle seat, and a lead screw engaged with an output end of the spindle motor, wherein the spindle motor is provided on the tilt-angle adjustment link, and one end of the lead screw is pivotably provided on the front portion of the bracket, and wherein rotation of the output end of the spindle motor causes the spindle motor to move along the lead screw, and drive the tilt-angle adjustment link to rotate about the pivot point of the tilt-angle adjustment link with the bracket.

9. The vehicle seat according to claim 1 or 2, wherein a pivot point of the front link with the seat frame is located in front of the energy absorbing slot.

10. The vehicle seat according to claim 1 or 2, wherein a pivot point of the front link with the seat frame is located behind the energy absorbing slot.

11. The vehicle seat according to claim 1 or 2, wherein the vehicle seat is a zero-gravity vehicle seat.

12. The vehicle seat according to claim 11, wherein the vehicle seat is movable between a zero-gravity position in which the tilt-angle adjustment link is held at one end of the energy absorbing slot and a normal seating position in which the tilt-angle adjustment link is held at the other end of the energy absorbing slot.
